(19) Europäisches Patentamt
European Patent Office
Office européen des brevets

(11) **EP 4 181 338 A1**

(12) **EUROPEAN PATENT APPLICATION**

(43) Date of publication:
**17.05.2023 Bulletin 2023/20**

(21) Application number: **21306586.5**

(22) Date of filing: **15.11.2021**

(51) International Patent Classification (IPC):
**H02J 3/00** (2006.01)

(52) Cooperative Patent Classification (CPC):
**H02J 3/003; H02J 3/004;** H02J 2203/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TotalEnergies OneTech**
**92400 Courbevoie (FR)**

(72) Inventors:
• **MONTERRAT, Antoine**
  **COURBEVOIE (FR)**
• **CARREJO GONZALEZ, Carlos Eduardo**
  **COURBEVOIE (FR)**
• **HILLIARD, Samantha**
  **COURBEVOIE (FR)**
• **EL SIED, Moataz**
  **COURBEVOIE (FR)**

(74) Representative: **Bandpay & Greuter**
**30, rue Notre-Dame des Victoires**
**75002 Paris (FR)**

(54) **OPTIMIZING THE SIZING OF A HYBRID POWER PLANT**

(57) The disclosure concerns a computer-implemented method for optimizing the sizing of a hybrid power plant. The method comprises providing one or more renewable power generation profiles. The one or more profiles include one or more subminute profiles. The method comprises providing a power demand that includes a demand for electricity. The method further comprises selecting a hybrid power production technology. The selection of the hybrid power production technology is based on the provided one or more profiles and on the power demand. The method further comprises selecting a power storage technology. The selection of the power storage technology is based on the selected hybrid power production technology. The method further comprises determining an optimal sizing of the hybrid power plant. The determination of the optimal sizing is based on the provided one or more profiles, on the power demand, on the selected hybrid power production and storage technology.

EP 4 181 338 A1

**Description**

**TECHNICAL FIELD**

The disclosure relates to the field of computer programs and systems, and more specifically to a method, system and program for optimizing the sizing of a hybrid power plant.

**BACKGROUND**

Hybrid power plants are becoming more and more common in modern power production. The demand for renewable energy and for reduction of carbon footprint tends to increase. Within this context, optimizing the sizing of a hybrid power plant is gaining wide importance. However, there is still a need for an improved solution for determining the sizing of a hybrid power plant.

**SUMMARY**

It is therefore provided a computer-implemented method for optimizing the sizing of a hybrid power plant. The method comprises providing one or more renewable power generation profiles for the hybrid power plant. The one or more profiles include one or more subminute profiles. The method comprises providing a power demand. The power demand includes a demand for electricity. The method further comprises selecting a hybrid power production technology for the hybrid power plant. The selection of the hybrid power production technology is based on the provided one or more profiles and on the power demand. The method further comprises selecting a power storage technology for the hybrid power plant. The selection of the power storage technology is based on the selected hybrid power production technology. The method further comprises determining an optimal sizing of the hybrid power plant. The determination of the optimal sizing is based on the provided one or more profiles, on the power demand, on the selected hybrid power production technology and on the selected power storage technology. This method may be referred to as "the optimization method".

The optimization method may comprise one or more of the following:

- the determining of the optimal sizing of the hybrid power plant includes performing:

  ∘ one or more simulations of renewable power generation perturbations;
  ∘ one or more simulations of component and/or power generating unit trips;

- the renewable power generation perturbations and/or the trips have a duration lower than an hour, preferably lower than thirty minutes;
- the determining of the optimal sizing of the hybrid power plant includes optimizing the sizing of the hybrid power plant further based on the results of the one or more simulations;
- the method further comprises performing a hybrid dynamic transient analysis of the determined optimal sizing of the hybrid power plant, the analysis comprising a dynamical stability study of the hybrid power plant based on the one or more profiles, wherein optionally the analysis further comprises a transient analysis study that is based on the dynamical stability study;
- the selecting of the power storage technology for the hybrid power plant comprises combining several storage types;
- the power demand further includes a demand for heat and/or a demand for hydrogen;
- the method further comprises determining a layout of the hybrid power plant based on the optimal sizing of the hybrid power plant, on the selected hybrid power production technology, and on the selected power storage technology;
- the selection of the power production technology comprises selecting one or more power production technologies among: wind turbines, PV panels, thermal solar panels, gas turbines, diesel engines, gas engines, steam turbines, combined cycle gas turbines (ccgt), biomass units, biogas units, boilers, fire heaters, heat pumps, electrolysers technologies, including PEM electrolysers, alkaline electrolysers and/or SOFC electrolysers, waste heat recovery units (WHRU), and/or heat recovery steam generators; and/or
- the selection of the power storage technology comprises selecting one or more power storage technologies among: flywheels, BESS (battery energy storage systems), redox flow batteries, hydrogen storage units, power-to-X units, latent heat storage units, sensible heat storage units, CAES (compressed air energy storage) units and LAES (liquid air energy storage) units.

It is also provided a computer-implemented method for upgrading a real-world hybrid power plant. This method may be referred to as "the upgrading method". The upgrading method comprises performing the optimization method, thereby determining an optimal hybrid sizing of the real-world hybrid power plant. The upgrading method further comprises determining, based on the optimal hybrid sizing, one or more renewable power generating units to be integrated in the real-world hybrid power plant and/or an improvement of one or more existing renewable power generating units of the real-world hybrid power plant.

The upgrading method may further comprise, in the real-world hybrid power plant integrating the determined renewable power generating units to the real-world hybrid power plant, and/or performing the improvement of the one or more existing renewable power generating units.

It is also provided a computer-implemented method for designing a hybrid power plant comprising gas turbines and renewable power generating units. This method may be referred to as "the design method". The design method comprises performing the optimization method, thereby determining an optimal hybrid sizing of the real-world hybrid power plant. The design method further comprises determining, based on the optimal hybrid sizing, a size of the gas turbines and/or a size of the renewable power generating units.

It is further provided a computer program comprising instructions for performing the optimization method and/or the upgrading method and/or the design method.

It is further provided a device comprising a computer-readable data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG.s 1 to 13 illustrate the optimization method; and

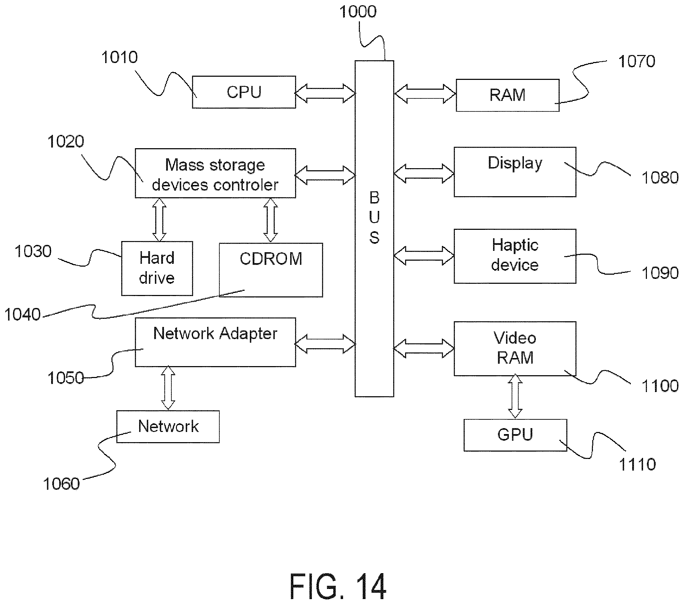

- FIG. 14 illustrates the system.

## DETAILED DESCRIPTION

It is proposed a computer-implemented method for optimizing the sizing of a hybrid power plant. The method comprises providing one or more renewable power generation profiles for the hybrid power plant. The one or more profiles include one or more subminute profiles. The method comprises providing a power demand. The power demand includes a demand for electricity. The method further comprises selecting a hybrid power production technology for the hybrid power plant. The selection of the hybrid power production technology is based on the provided one or more profiles and on the power demand. The method further comprises selecting a power storage technology for the hybrid power plant. The selection of the power storage technology is based on the selected hybrid power production technology. The method further comprises determining an optimal sizing of the hybrid power plant. The determination of the optimal sizing is based on the provided one or more profiles, on the power demand, on the selected hybrid power production technology and on the selected power storage technology. This method may be referred to as "the optimization method".

The optimization method forms an improved solution for determining the sizing of a hybrid power plant.

Notably, the method optimizes the size of a hybrid power plant based on a power demand and renewable power generation data (i.e. the one or more profiles). In other words, the method determines an optimal size of the hybrid power plant in accordance with the available renewable power and the power demand.

Furthermore, not only does the method optimize the hybrid power plant size, but the method does so based on one or more renewable power generation profile (which capture the available/potential renewable power to be used) that include one or more subminute profiles (i.e. one or more profiles at a subminute scale). This improves accuracy of the profiles used in the optimization ultimately yields an improved accuracy of the optimal sizing. The method allows to model with a high fidelity the resemblance to the real hybrid power plant before real-world implementation (e.g. in the context of the upgrading method or of the design method, discussed hereinafter), thereby allowing to reduce uncertainties and error risks. Besides optimizing the sizing of the plant, the method also allows to qualify the nature of the renewable power as a function of the demand for power (e.g. solar panels (e.g. photovoltaic, thermic, or hybrid), wind turbines, or batteries). The choice of the technology may depend on several factors, such as space, geography, greenfield/brownfield. The optimization of the sizing may be constrained and may guide the choice of technology (e.g. one may want to put batteries in a FPSO, but there is not enough space, so the technology may be changed).

Moreover, the optimization method allows in examples to perform an energetic and electric analysis of the power plant in addition to the real-world sizing of the power plant that the method allows. The method also allows in examples to perform a thermic analysis of the hybrid power plant. The method also allows in examples to account for a demand for hydrogen in the sizing and/or the analysis.

The optimization method may thereby be used for upgrading a real-world hybrid power plant. In that respect, it is also provided a computer-implemented method for upgrading a real-world (i.e. existing) hybrid power plant. This method may be referred to as "the upgrading method". The upgrading method comprises performing the optimization method, thereby determining an optimal hybrid sizing of the real-world hybrid power plant. The upgrading method further comprises determining, based on the optimal hybrid sizing, one or more renewable power generating units to be integrated in the real-world hybrid power plant and/or an improvement of one or more existing renewable power generating units of the real-world hybrid power plant. The upgrading method may further comprise, in the real-world hybrid power plant integrating the determined renewable power generating units to the real-world hybrid power plant, and/or performing the improvement of the one or more existing renewable power generating units.

The optimization method may also be used for designing a hybrid power plant. It is also provided a computer-implemented method for designing a hybrid power plant comprising gas turbines and renewable power generating units. This method may be referred to as "the design method". The design method comprises performing the optimization method, thereby determining an optimal hybrid sizing of the real-world hybrid power plant. The design method further comprises determining, based on the optimal hybrid sizing, a size of the gas turbines and/or a size of the renewable power generating units.

The optimization method is now further discussed.

The optimization method comprises providing one or more renewable power generation profiles for the hybrid power plant. A profile is herein data representing an evolution of a renewable power generation over time, for example in the form of one or more curves representing the evolution of the renewable power generation over time. The one or more profiles include one or more subminute profiles. A subminute profile is herein a renewable power generation profile that represents the evolution of the power (e.g. in the form of one of more curves) over time with a time scale that is a subminute scale. The providing of the one or more generation profiles may comprise obtaining already available profiles, e.g. from a (e.g. distant) database or memory. The providing of the one or more profiles may alternatively or additionally comprise forming the one or more profiles, or at least some of them (in which case the remaining profiles may be already available), for example by processing raw data such as meteorological data, geologic data, topographic data and/or geographical data so as to obtain the profiles. The raw data may be obtained by different means, for example one or more of: buying them from a provider of meteorological data (e.g. irradiance, wind) and/or generating them using MATLAB or Python via a random (stochastic) data generation code. The raw data may comprise holes (e.g. missing points or sets of points), which may be corrected by using linear interpolations, or noise and/or outliers, which may be processed (e.g. denoised) using any suitable method. In examples, the one or more profiles consist in: an hourly photovoltaic (PV) generation profile, a subminute PV generation profile, a smoothed PV generation profile, variability metrics, an hourly wind generation profile and a subminute wind generation profile. The providing of the one or more profiles may in examples comprise synthetizing the sub-minute profiles, or obtaining them via sensors (e.g. irradiance captors, metrology) or buying them when available.

In examples, the providing of the one or more profiles comprises providing irradiance data, data about land area and topography (i.e. relative to a location, or potential location, of the hybrid power plant), and wind speed data. These data may already be available, in which case providing them may comprise obtaining them, e.g. from a (e.g. distant) database or memory. Alternatively, the providing of these data may comprise, for at least a part or all of these data, acquiring them, e.g. by performing physical measurements (e.g. irradiance measurements, wind speed measurements, geological measurements, topographical measurements, and/or geographical measurement). The providing of the one or more profiles in these examples then comprises processing these data to obtain the profiles, for example by performing one or more iterations of any one or any combination (e.g. all) of the following steps:

- determining a normalized PV farm and a normalized wind farm based on the data about land area and topography;
- determining an hourly PV generation profile by processing, for example using the PVsyst solution, the irradiance data and the normalized PV farm;
- determining a subminute PV generation profile by processing the irradiance data and the normalized PV farm;
- determining a smoothed PV generation profile by processing, for example using a Wavelet Variability Model (WVM) solution, the irradiance data and the normalized PV farm;
- determining variability metrics, for example by performing a variability analysis on the output of the WVM;
- determining an hourly wind generation profile by processing the normalized wind farm and the wind speed distribution;
- determining a subminute wind generation profile by processing, for example using a statistical generation tool, the normalized wind farm and the wind speed distribution.

The optimization method further comprises providing a power demand. The power demand includes a demand for electricity, e.g. in the form of an electricity consumption profile. The power demand may further include a heat demand, e.g. in the form of a heat consumption profile. The power demand may further include a hydrogen demand, e.g. in the form of a hydrogen consumption profile. The optimization method may further comprise providing data about the available fuel types, data about the plant location, specifications of the available power generation or storage units/technologies, and/or a production duration (i.e. an expected duration of power production by the plant, for example a project lifetime). The optimization method may further comprise providing user objectives, e.g. with respect to the investment type (e.g. brownfield or greenfield investment), reliability, environment (e.g. carbon emissions) and/or costs.

The optimization method further comprises selecting a hybrid power production technology for the hybrid power plant based on the provided one or more profiles and on the power demand. The selecting may comprise a pre-processing of the profiles to study their intrinsic variability (i.e. intermittency characterization). This allows to extract the worst-case scenarios. The pre-processing may correspond to the evacuation of the maxima of the absolute value of the derivative of the renewable power generation function (PV or wind). Thereby the method evaluates the extreme ramps, which allows to select a PGU adapted to the considered site and the different technologies to establish a power production technology. Selecting a hybrid power production technology comprises selecting renewable power units and non-renewable power production units, according to the provided one or more profiles and on the power demand. The power production units may be selected among a list of power production units that includes one or more of: renewable power production units (including wind turbines, PV panels, and/or thermal solar panels), gas turbines, diesel engines, gas engines, steam turbines, combined cycle gas turbines (ccgt), biomass units, biogas units, boilers, fire heaters, heat pumps, electrolysers technologies (such as PEM electrolysers, alkaline electrolysers and/or SOFC electrolysers), waste heat recovery units (WHRU), and/or heat recovery steam generators. The selection of the hybrid power production technology may comprise selecting any one or any combination of the units of the above list. In examples, the selection results in one or more of the following hybrid production technologies: PGU (power generation unit) + Renewables, PGU + Storage; Renewables + Storage, PGU + Renewables + Storage, PGU + Renewables + Electrolyser PGU + Storage + Electrolyser, Renewables + Storage + Electrolyser, PGU + Renewables + Storage + Electrolyser, PGU + Electrolyser, and/or Renewables + Electrolyser. The selection is based on the provided one or more profiles and on the demand for electricity. The selection may be further based on the demand for heat, on the demand for hydrogen, on available water, on available fuel (fossil or renewable), and/or on user objectives and/or requirements.

In examples, the selection may comprise selecting automatically some technologies, for example electrolysers in the case of a hydrogen consumption in the plant. For the renewable units, wind turbines may be automatically selected when a mean wind threshold is reached. Solar panels may be automatically selected when a ratio between the available surface and the maximal power of the load reaches a certain threshold. The demand for heat and electricity may define a first strategy in terms of PGU units used, first depending on the available fuel and then depending on the project size. For example, let a project have the following characteristics: power demand 176MW (constant) with a 15MW loading of 24h every 72h, available fuel=gas, available size=10km$^2$, mean wind 6m/s for a year, delta frequency 1%, delta voltage 2%. In the first iteration, the method may select automatically the wind turbine technology with PV technology, combine with gas turbines. The storage technology selection may then be performed using subminute data for the PV and the wind, and a battery may be automatically initially selected for power storage.

In examples, the selection of the production technology comprises one or more iterations of any one or any combination (e.g. all) of the following steps:

- selecting a number of wind turbines based on the provided profile(s);
- selecting a number of PV panels based on the provided profile(s);
- selecting a number of thermal solar panels based on the provided profile(s);
- selecting a number of gas turbines based on the demand for electricity, on the available fuel, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of diesel engines based on the demand for electricity, on the available fuel, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of gas engines based on the demand for electricity, on the available fuel, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of steam turbines based on the demand for electricity, on the available fuel, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;

- selecting a number of CCGT based on the demand for heat, on the demand for electricity, on the available fuel, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of biomass and/or biogas units based on the demand for heat, on the demand for electricity, on the available fuel, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of HRSG based on the demand for heat, on the selected number of thermal solar panels, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of WHRU based on the demand for heat, on the selected number of thermal solar panels, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of boilers based on the demand for heat, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of fire heaters based on the demand for heat, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of heat pumps based on the demand for heat, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production;
- selecting a number of electrolysers technologies based on the demand for hydrogen, on the available water, optionally on the user objectives and requirements, on the available crude oil engine, on the available fuel oil, on the available coal, and on the available nuclear. The selection depends on the site and on the available resource (available fuel), and on the characterization of the intermittency (for engine choice), which yields a residual load equal to the load minus the renewable production.

In each one of the above items, the selected number may be zero, one, or higher than one.

The optimization method further comprises selecting a power storage technology for the hybrid power plant based on the selected hybrid power technology. The selection of the power storage technology may comprise a pre-processing of the profiles, similar to that performed for the selection of the power prediction technology. Depending on the variability period, adapted storage solutions are put forward by this processing. For example, a strong variability in a reduced time horizon tends to lead to the use of flywheel of BESS technologies. A longer variation period (e.g. a season) may lead to solutions of the change of energetic vector type, such as thermal storage or hydrogen storage. Selecting a power storage production technology comprises selecting power storage units, according to the selected power production technology. The power storage units may be selected among a list of power storage units that includes one or more of: flywheels, BESS (battery energy storage systems), redox flow batteries, hydrogen storage units, power-to-X units, latent heat storage units, sensible heat storage units, CAES (compressed air energy storage) units and LAES (liquid air energy storage) units. The selection of the power storage technology may comprise selecting any one or any combination of the units of the above list. The selection of the power storage technology for the hybrid power plant may for example comprises combining several storage types of the above list. Combining several storage types improves the hybrid power plant. Indeed, there exists short term storages and long-term storages, as well as storages that act as energetical vectors (e.g. hydrogen, heat). Combining several storage types allows to reduce the losses by performing only one transformation (e.g. electricity to heat or electricity to hydrogen) so as to consume heat or hydrogen directly in the process. Furthermore, combining several storage types also allows to improve the life duration of components, such as electrolysers for hydrogen storage, by using a batterie or a flywheel to reduce the fluctuations related to the intermittency and to act as a buffer in the direct coupling renewable + electrolyze. In short, this provides improvements with respect to the life duration of the components, to the avoided $CO_2$ emissions, and to the global efficiency of the system. The selection may be further based on the electrical production of the selected power production technology, on the heat production of the selected power production technology, and/or on the hydrogen production of the selected power production technology.

In examples, the selection of the storage technology comprises one or more iterations of any one or any combination (e.g. all) of the following steps:

- selecting a number of flywheels based on the demand for power, the demand for hydrogen and/or heat (depending on the type of storage), on the storage capacity to filer the electrical signal (frequency/voltage, active and reactive power, and harmonics), on the electrical production of the selected power production technology and on the selected power production technology;

- selecting a number of BEES based on the demand for power, the demand for hydrogen and/or heat (depending on the type of storage), on the storage capacity to filer the electrical signal (frequency/voltage, active and reactive power, and harmonics), on the electrical production of the selected power production technology and on the selected power production technology;

- selecting a number of redox flow batteries based on the demand for power, the demand for hydrogen and/or heat (depending on the type of storage), on the storage capacity to filer the electrical signal (frequency/voltage, active and reactive power, and harmonics), on the electrical production of the selected power production technology and on the selected power production technology;

- selecting a number of hydrogen storage units based on the demand for power, the demand for hydrogen and/or heat (depending on the type of storage), on the storage capacity to filer the electrical signal (frequency/voltage, active and reactive power, and harmonics), on the electrical production of the selected power production technology, on the hydrogen production of the selected power production technology, and on the selected power production technology;

- selecting a number of power-to-X units based on the demand for power, the demand for hydrogen and/or heat (depending on the type of storage), on the storage capacity to filer the electrical signal (frequency/voltage, active and reactive power, and harmonics), on the electrical production of the selected power production technology, on the hydrogen production of the selected power production technology, and on the selected power production technology;

- selecting a number of latent heat storage units based on the demand for power, the demand for hydrogen and/or heat (depending on the type of storage), on the storage capacity to filer the electrical signal (frequency/voltage, active and reactive power, and harmonics), on the heat production of the selected power production technology and on the selected power production technology;

- selecting a number of sensible heat storage units based on the demand for power, the demand for hydrogen and/or heat (depending on the type of storage), on the storage capacity to filer the electrical signal (frequency/voltage, active and reactive power, and harmonics), on the heat production of the selected power production technology and on the selected power production technology;

- selecting a number of CEAS units based on the demand for power, the demand for hydrogen and/or heat (depending on the type of storage), on the storage capacity to filer the electrical signal (frequency/voltage, active and reactive power, and harmonics), on the heat production of the selected power production technology and on the selected power production technology; and

- selecting a number of LEAS units based on the demand for power, the demand for hydrogen and/or heat (depending on the type of storage), on the storage capacity to filer the electrical signal (frequency/voltage, active and reactive power, and harmonics), on the heat production of the selected power production technology and on the selected power production technology.

In each one of the above items, the selected number may be zero, one, or higher than one.

The method further comprises determining an optimal sizing of the hybrid power plant based on the provided one or more profiles, on the power demand, on the selected hybrid power production technology and on the selected power storage technology. Determining the optimal sizing comprises performing an optimization of the hybrid power plant sizing, e.g. an optimization of the sizing of each selected production or storage technology, to meet the power demand given the provided one or more profiles. The optimization is thus an optimization under constraints, the constraints including for example the power demand, the production duration, the provided profile(s), user requirements and/or user-provided constraints with respect to variations of frequency, voltage, active power and reactive power. The optimization may optimize one or more objective functions under the constraints, for example one or more $CO_2$ emission minimization functions and/or one or more cost minimization function(s) (OPEX, CAPEX) under the constraints.

The determining of the optimal sizing of the hybrid power plant may include performing one or more simulations of renewable power generation perturbations, and/or one or more simulations of component and/or power generating unit trips. The results of the simulations may be used in the optimization. In other words, the determining of the optimal sizing of the hybrid power plant may include optimizing the sizing of the hybrid power plant further based on the results of the one or more simulations. For example, the determining of the optimal sizing may comprise generating a distribution of the simulated perturbations and/or trips with varying amplitude and frequency. The optimization may include performing a stochastic optimization that includes several scenarios with these generating stochastic distributions and testing the dispatch's robustness depending on the perturbations and/or trips. The purpose is to measure the frequency, voltage, active power, and reactive power variations, and as well the PGU-induced $CO_2$ emissions. This allows to take into account perturbations and/or trips in the optimization. The time granularity of the optimization method(s) used may be adapted to use the subminute timescale. The simulations may be based on the provided subminute profile(s), which improves the time accuracy of the simulation, and ultimately of the optimization and thus of the sizing. The perturbations and/or trips may include one or more of cloud passing, wind speed extreme variation, PGU Trip, electrical component failure (e.g. power electronics, electrical transformers, cables, and/or inverters). The renewable power generation perturbations and/or the trips may have a duration lower than an hour, preferably lower than thirty minutes. Such durations are handled by the method since the method uses subminute profiles.

The simulation(s) may be performed by a PMS (production management system), e.g. the method may comprise using the PMS for performing the simulation(s). The PMS may take as input recommendations of an EMS (energy management system), e.g. the method may comprise using the EMS system for outputting recommendations, for example based on one or more of: multi-horizon forecasting data (e.g. about load, renewable and/or market), and/or result of a previous optimization (in which case the optimization comprises iterations, with exchanges with the EMS between iterations). The PMS may follow the recommendations of the EMS while satisfying strong constrains with respect to voltage balance and user-fixed frequency. For that the PMS may use the sub-minute profiles which may form an input of the determining of the optimal sizing to evaluate a power outcome at each time between the difference production sources, loads, and storage units. This yields a power dispatch at different time horizons, and notably sub-minutes. Furthermore, the EMS may take into account the meteorological predictions, the load predictions, the market predictions (on grid case). This forecasting is useful for establishing an operation strategy for the PGU and the storage systems so as to reduce $CO_2$ emissions. The PMS receives as instructions outputs of the EMS and the PMS follows them if it can respect the constraints (otherwise it respects the strong constraints of voltage/power/harmonics, it goes against the optimal functioning system but ensures a good functioning of the system (fulfills the constraints)). The PMS and EMS are independents and have different goals: stability and local optimization for the PMS, optimization of the whole system, generation, and load for the EMS.

The performing of the optimization may comprise, e.g. at an initial step, selecting an optimization method, for example in a TEC library. The selected optimization may comprise one or more of a rule-based algorithm, linear programming, analytical methods, stochastic methods, and/or IA techniques. The selection may be based on the selected production technology and on the selected storage technology. The selection may also be based on the objective function to optimize. The performing of the optimization may thus comprise sizing the objective function to optimize, for example based on cost objective(s), CO2 objective(s) and/or availability criteria. These objective(s) and criteria may stem from user objectives.

One of the possible difficulties of the optimization, that the method may overcome, lies in the coupling between the subminute dynamic study and the life of the project. The optimization must succeed in finding the right time step to include the perturbations and/or trips but also to converge the solution over a project duration of 15 years or more. On the other hand, the optimization may comprise adding uncertainty to find a convergent solution. This enables reduction of error and uncertainties to ensure system stability with convergence methods. In the long term, a controller may be used to reduce the error on an hourly basis. Another difficulty that the method may overcome is the flexibility provided by the method for choosing different optimization techniques in a plug-and-play mode. Depending on the complexity of the topology and the user's constraints, different optimization techniques may be run in parallel, in series or by choice among the following methods found elsewhere in the scientific literature: stochastic optimization, MILP, particle swarm optimization, multi-objective optimization under uncertainties, artificial intelligence (e.g. artificial neural networks, genetic algorithms, fuzzy logic, hybrid methods).

The optimization method may further comprises determining a layout of the hybrid power plant based on the optimal sizing of the hybrid power plant, on the selected hybrid power production technology, and on the selected power storage technology. This may in examples comprise one or more iterations of any one or any combination (e.g. all) of the following steps:

- determining a grid code and/or a network code based on user objectives and requirements;
- determining stability requirements based on user objectives and requirements;
- determining a grid code power adequacy requirement based on user objectives and requirements;
- determining a component mapping based on the selected technology (i.e. production and storage), on the optimal sizing, on an existing facility layout, on the geographic location of the plant, and on map data;
- determining a control selector based on the grid code and/or the network code, on the stability requirements, and on the grid code power adequacy requirements;

- determining PMS data based on the control selector;
- determining an electrical design and protection equipment set up, a heat infrastructure design, and a hydrogen infrastructure design based on the component mapping;
- determining a hybrid power plant component mapping based on the component mapping;
- determining a hybrid power plant electrical layout based on the electrical design, and on the protection equipment set up;
- determining a hybrid power plant single line diagram based on the electrical design, and on the protection equipment set up;
- determining a hybrid power plant 3-phase line diagram based on the electrical design, and on the protection equipment set up; and
- determining a physical layout of the hybrid power plant based on the component mapping.

The optimization method may further comprise performing a hybrid dynamic transient analysis of the determined optimal sizing of the hybrid power plant, the analysis comprising a dynamical stability study of the hybrid power plant based on the one or more profiles. The analysis may further comprise a transient analysis study that is based on the dynamical stability study.

The dynamical stability study may in examples be based on the power demand, on the subminute profile(s), on the simulated perturbations and/or trips, and on the grid code and/or the network code, the stability requirements, and the grid code power adequacy requirements. The dynamical stability study may in examples comprise one or more iterations of any one or any combination (e.g. all) of the following steps:

- subminute events characterization based on the simulated perturbations and/or trips and on the subminute profiles(s);
- electrolysers dynamics based on the subminute profiles(s) and on the demand for hydrogen;
- contingencies effects based on the demand for heat, on the demand for electricity, on the subminute events characterization and on the electrolysers dynamics;
- preliminary electrical studies based on the contingencies effects.

The transient analysis study may in this example comprise one or more iterations of the following steps:

- performing a load flow study;
- performing a short circuit study;
- performing a harmonic study;
- performing a flicker study based on the results of the harmonic study; and
- determining CO2 emissions and power adequacy based on the load flow study.

Implementations of the method are now discussed, with reference to FIG.s 1 to 13.

These implementations take as inputs: a project location (e.g. provided by a user), whether the project is a brownfield type project or greenfield type project (e.g. provided by the user), user objective(s) (such as reliability, environmental aspects, cost, e.g. provided by the user), on site temperature hourly time series, site demand for power (*e.g.* provided by site operators) including a demand for electricity (*e.g.* an electricity profile), a demand for heat (e.g. a heat profile), a demand for hydrogen (*e.g.* a hydrogen consumption profile), thermal power generation units specifications (e.g. provided by PGU constructors and site operators), fuel types (oil, gas, diesel) and specifications thereof (LHV and $CO_2$ factor) (e.g. provided by site operators, and project lifetime/duration (e.g. provided by a user). These implementations may output: PV optimal sizing, wind optimal sizing, PGU optimal sizing, storage selection, storage sizing, storage optimized lifetime, active power balance, reactive power balance, harmonic level constraints, curtailment renewables, component failure prediction, $CO_2$ emission levels, harmonic levels, short circuit analysis, fuel consumption.

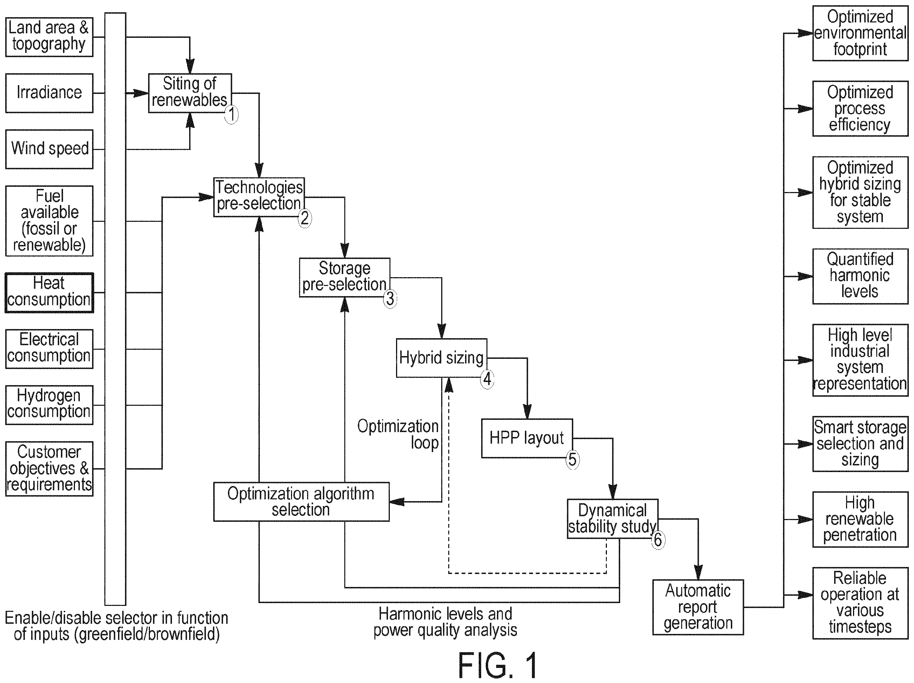

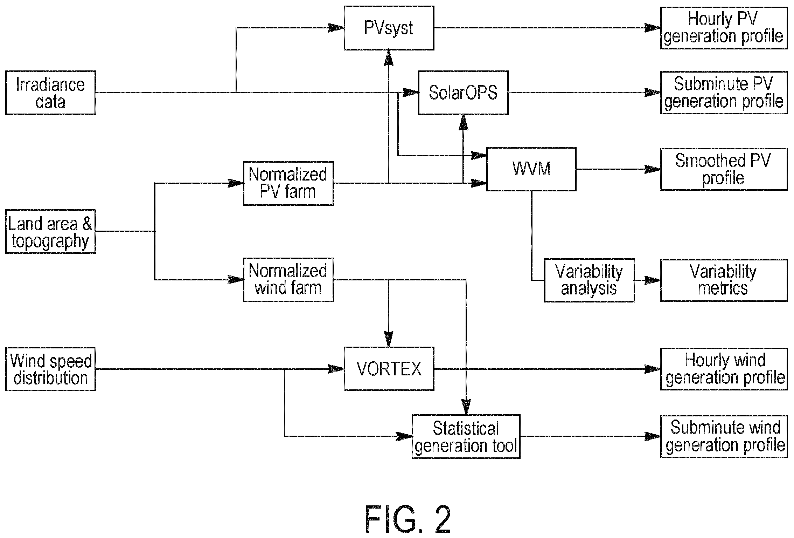

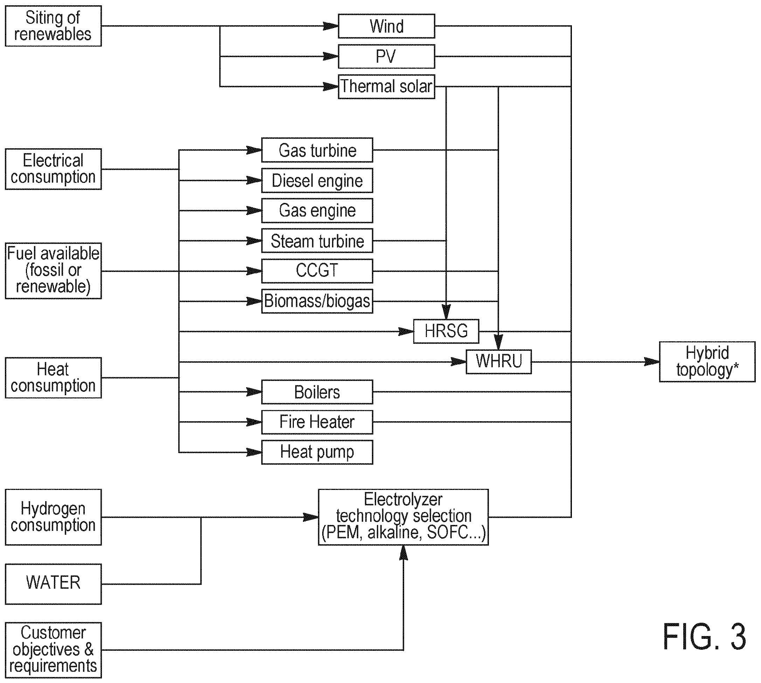

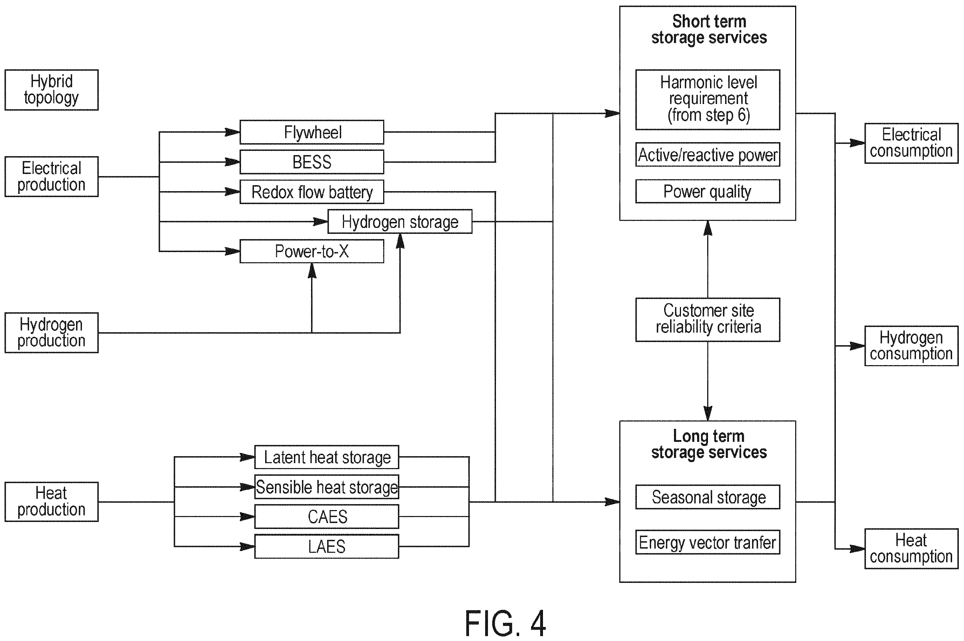

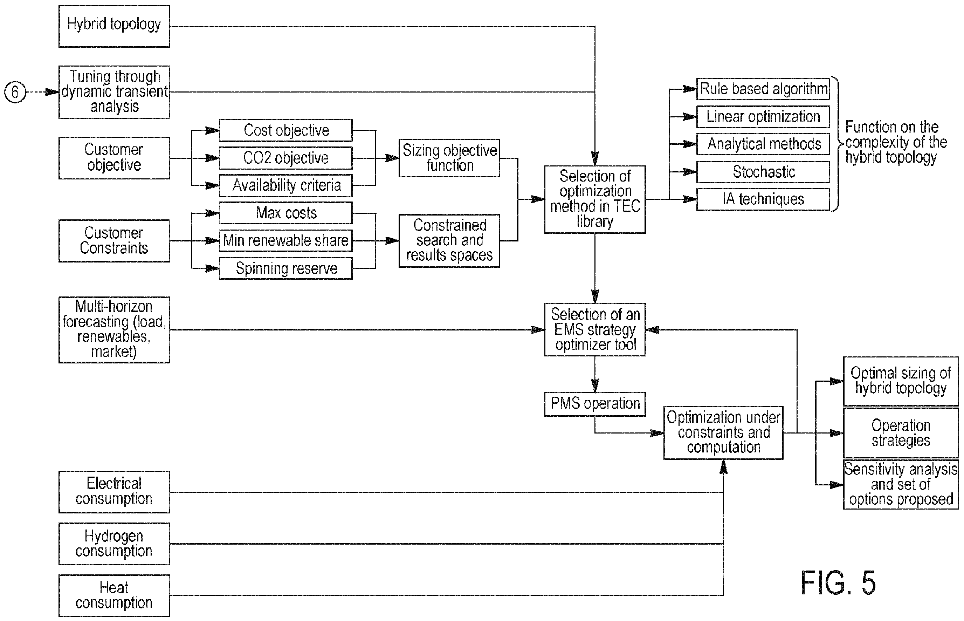

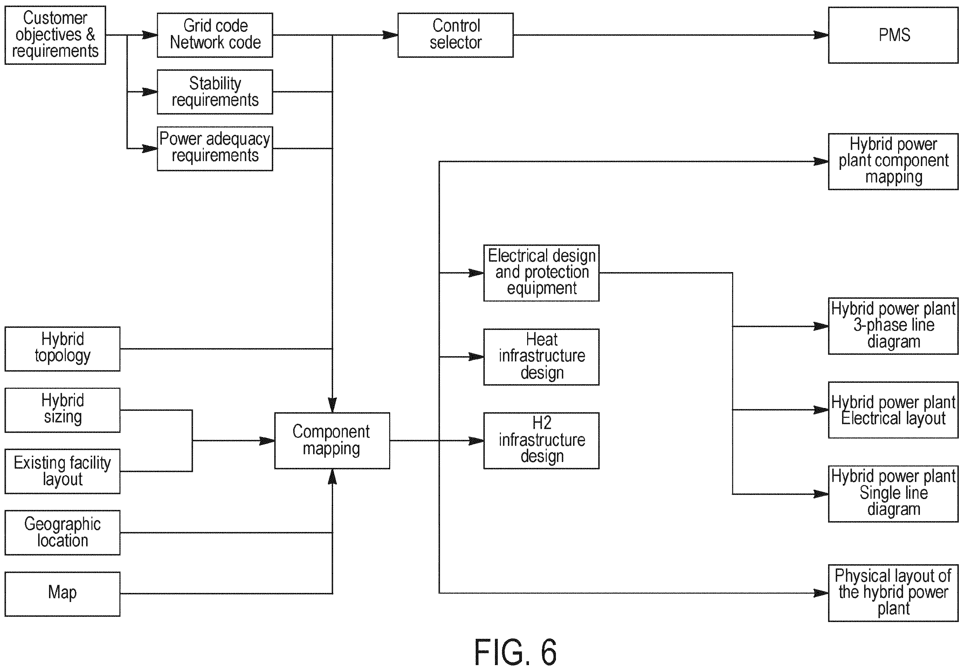

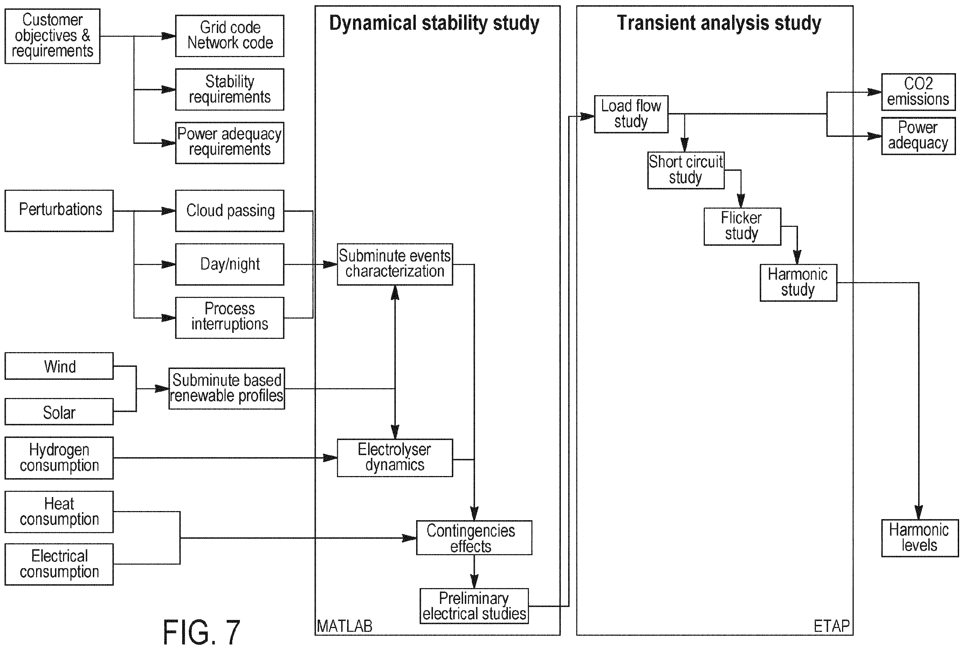

FIG. 1 shows a flowchart implemented in implementations of the method. FIG. 2 shows a flowchart of implementations of the providing of the one or more profiles. FIG. 3 shows a flowchart of implementations of the selection of power production technology. FIG. 4 shows a flowchart of implementations of the selection of storage technology. FIG. 5 shows a flowchart of implementations of the determining of the optimal sizing. FIG. 6 shows a flowchart of implementations the determining of a layout of the hybrid power plant. FIG. 7 shows a flowchart of implementations of the hybrid dynamic transient analysis.

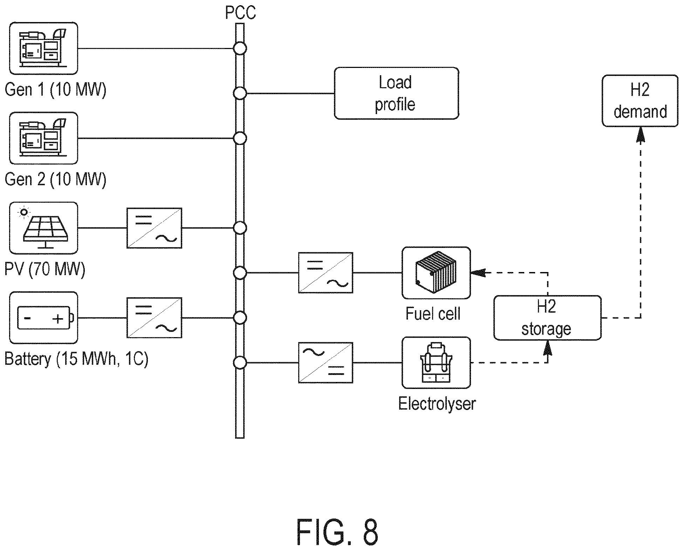

FIG. 8 shows an example of hybrid technology selection according to implementations of the method. In the example of FIG. 8, the installation comprises gas turbines, PV units, BESS and hydrogen production and storage units.

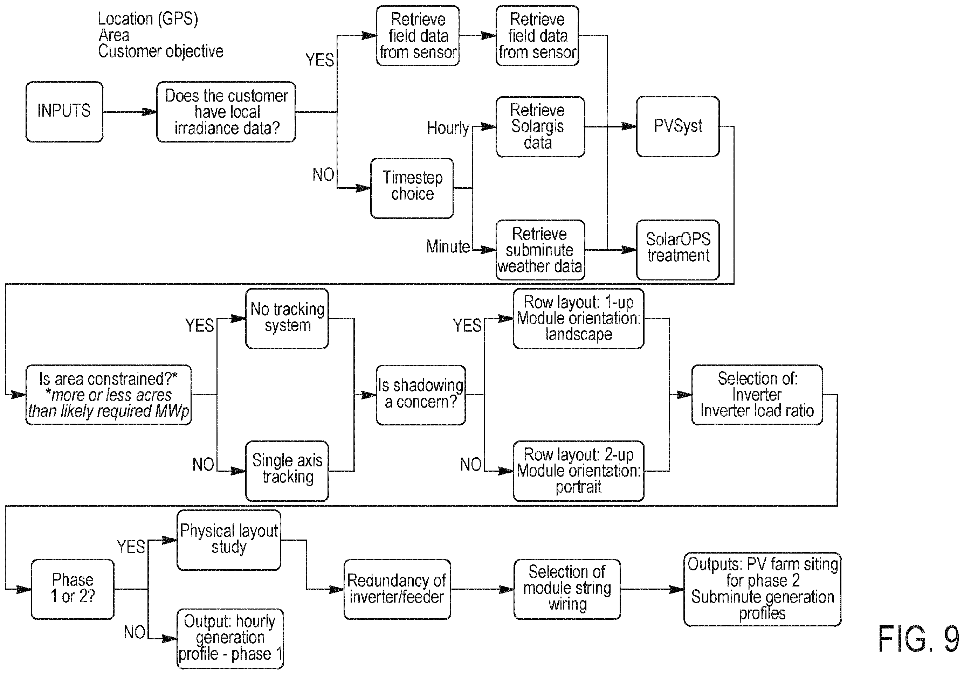

FIG. 9 shows a flowchart of PV resource assessment according to implementations of the method.

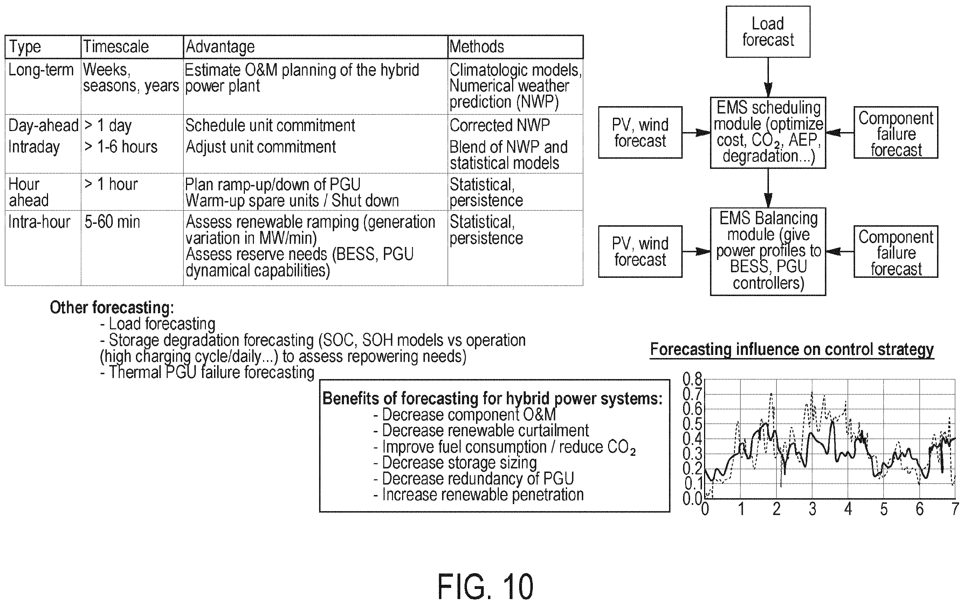

FIG. 10 illustrates the functioning of the EMS according to implementations of the method.

In implementations of the method, the storage sizing for harmonic levels management may be performed according to the following formulas:

$$v(t) = \sum_{n=1}^{\infty} v_n(t) = \sum_{n=1}^{\infty} \sqrt{2}V_n\sin\left(n\omega t + \theta_n\right)$$

$$i(t) = \sum_{n=1}^{\infty} i_n(t) = \sum_{n=1}^{\infty} \sqrt{2}I_n\sin\left(n\omega t + \theta_n\right)$$

In implementations of the method, the selection of the optimization method may be as follows:

- if the inputs comprise uncertainties and low precision data, a stochastic optimization method may be selected;
- if the inputs comprise medium precision data, an energetic optimization method may be selected;
- if the inputs comprise high precision data (subminute based), a linear-based optimization method may be selected.

An example of a subminute analysis according to the previously discussed implementations is now discussed, with reference to FIG.s 11-12. The aim is to determine the amount of stored energy that should be assured for maintaining power balance in the system under disturbances in PV production.

Two subcases are under study:

- Instantaneous PV power loss (10 - 90% of Peak Power), and
- Progressive PV power loss due to massive cloud covering.

For the battery sizing, the worst-case scenario is defined by 90% loss of PV peak power. This scenario has been built through the following analysis:

- If instantaneous output PV production exceeds the load without possible storage, the PV power is curtailed in such way that the base power of the four gas generators is assured.
- If instantaneous output PV production drops due to meteorological conditions, gas generators supply the power and will compensate accordingly, along with the battery system.

Once the service is established, the generators start to ramp-down and the battery can be recharged, if possible. Otherwise, the PV power will be curtailed accordingly with its variations. Some considerations have been taken into account related to the following constraints: stability and security of supply and Max PV output drop (%).

**Case 1: Instantaneous PV power loss (90% of Peak Power)**

In this case, the analysis studies the effect of an instantaneous PV power loss. The power demand will be covered by the battery and the ramping up GT. For the battery sizing, a 90% efficiency power converter will be considered for the simulation.

**Perturbation description**

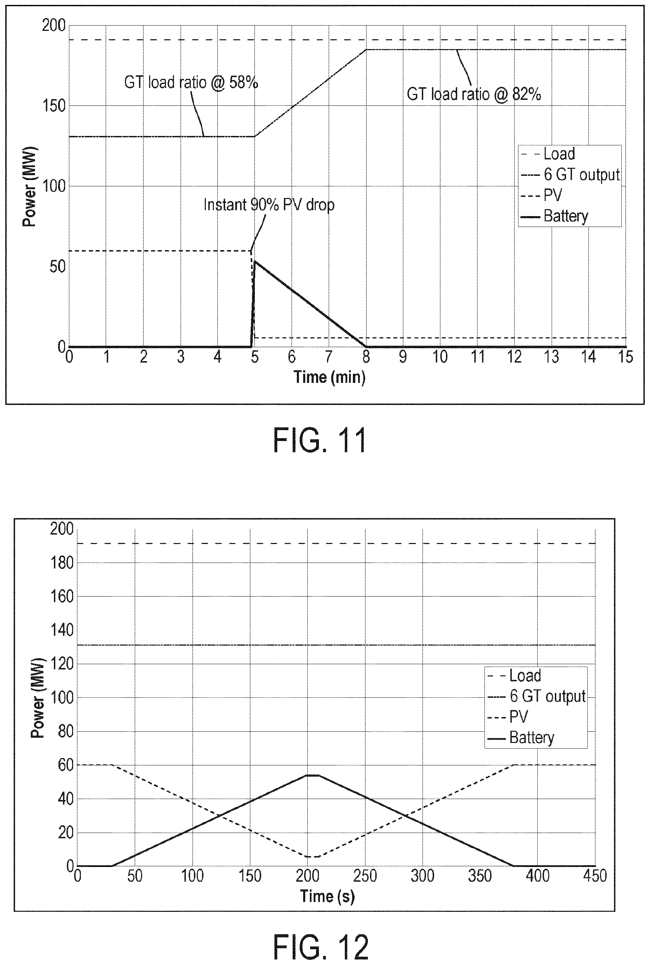

Figure 11 shows that at the instant t =5 min, PV production falls from 60 MW to 6 MW. At this point, compensation energy must be delivered from the battery and the GT start to ramp up.

**Results**

According to these conditions, the following may be established by the analysis:

*Table 1: setup output for instantaneous power loss.*

| | |
|---|---|
| Battery max rated power needed | 54 MW |
| Slew rate $T_{ramp}$ = 54 MW/18 MW/min | 3 min |
| Before event utilization rate | 58% |
| After event utilization rate | 82% |

(continued)

| Ramping up gas consumption | 471.7 m$^3$ |
|---|---|
| Ramping up $CO_2$ emission | 0.91 t$CO_2$ |
| Battery range of power variation | [0,54] MW |
| Associated battery energy output for event response $$E_{batt} = \frac{54\ MW * 3\ min}{2}$$ | 1.35 MWh |

*Table 2: Battery sizes according to DoD variation under sudden PV power loss*

| DoD | Required Battery |
|---|---|
| 20 | 6.75 |
| 40 | 3.38 |
| 50 | 2.7 |
| 60 | 2.25 |
| 80 | 1.7 |

**Case 2: Progressive PV power loss and recovery due to a massive cloud covering the field**

In this case, the analysis studies the effect of the passage of a massive cloud over the PV plant. The power demand will be covered by the battery and the ramping up GT. For the battery sizing, a 90% efficiency power converter will be considered for the simulation.

**Perturbation description**

*Table 3: Description of the event: massive cloud covering the field*

| Perturbation description | | | |
|---|---|---|---|
| Size of the cloud | | m | 550 |
| Wind speed | | m/s | 3,3 |
| Duration of Cloud above PV plant | | sec | 20 |
| Solar plant geometry | Square | m per side | 610 |
| Eventduration | | min | 5 min 50 |
| PV plant power reduction | | % | 90 |

Figure 12 illustrates a cloud passing event covered by a battery without GT intervention

**Results**

According to this scenario, the energy required from the storage system is estimated to be:

$$E_{req\_bat} = 54\ MW*20\ seconds\ min + 54\ MW* 170\ seconds = 2,85\ MWh.$$

Under the same perspectives described for case 1. Table 4 below summarizes minimum energy storage batteries should require for only solving the transitory contingence of a cloud passage at the aforementioned speed. These values can evolve, having in mind possible ramp-up event from the generators and additional load variations in this time frame.

| DoD | Required Battery (MWh) |
|-----|------------------------|
| 20 | 14,3 |
| 40 | 7,1 |
| 50 | 5,7 |
| 80 | 3,6 |

*Table 4: Minimum proposed battery sizes according to SoC variation for cloud passage at 3.33 m/s sudden PV power loss. Efficiency of storage and conversion system at 90%*

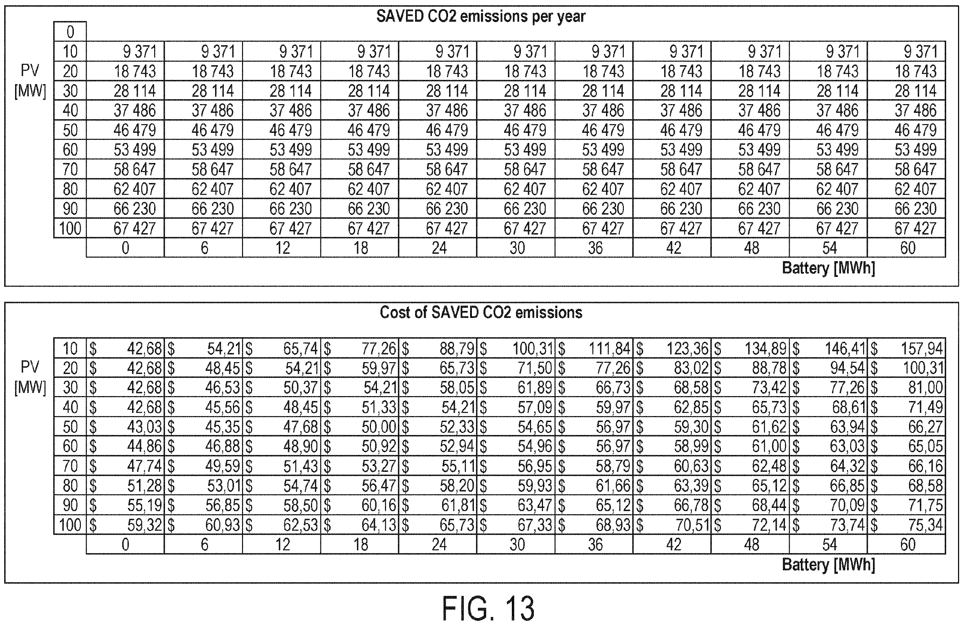

FIG. 13 shows an example of KPI (Key Performance Indicator) results that may be obtained by the method.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 14 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, especially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

The computer program may alternatively be stored and executed on a server of a cloud computing environment, the server being in communication across a network with one or more clients. In such a case a processing unit executes the instructions comprised by the program, thereby causing the methods to be performed on the cloud computing environment.

**Claims**

1. A computer-implemented method for optimizing the sizing of a hybrid power plant, comprising:

   - providing:

     ◦ one or more renewable power generation profiles for the hybrid power plant, the one or more profiles including one or more subminute profiles; and
     ◦ a power demand, the power demand including a demand for electricity;

   - selecting a hybrid power production technology for the hybrid power plant based on the provided one or more profiles and on the power demand;
   - selecting a power storage technology for the hybrid power plant based on the selected hybrid power production technology; and
   - determining an optimal sizing of the hybrid power plant based on the provided one or more profiles, on the power demand, on the selected hybrid power production technology and on the selected power storage technology.

2. The method of claim 1, wherein the determining of the optimal sizing of the hybrid power plant includes performing:

   - one or more simulations of renewable power generation perturbations;
   - one or more simulations of component and/or power generating unit trips.

3. The method of claim 2, wherein the renewable power generation perturbations and/or the trips have a duration lower than an hour, preferably lower than thirty minutes.

4. The method of claim 2 or 3, wherein the determining of the optimal sizing of the hybrid power plant includes optimizing the sizing of the hybrid power plant further based on the results of the one or more simulations.

5. The method of any one of claims 1 to 4, wherein the method further comprises performing a hybrid dynamic transient analysis of the determined optimal sizing of the hybrid power plant, the analysis comprising a dynamical stability study of the hybrid power plant based on the one or more profiles, wherein optionally the analysis further comprises a transient analysis study that is based on the dynamical stability study.

6. The method of any one of claims 1 to 5, wherein the selecting of the power storage technology for the hybrid power plant comprises combining several storage types.

7. The method of any one of claims 1 to 6, wherein the power demand further includes a demand for heat and/or a demand for hydrogen.

8. The method of any one of claims 1 to 7, wherein the method further comprises determining a layout of the hybrid power plant based on the optimal sizing of the hybrid power plant, on the selected hybrid power production technology, and on the selected power storage technology.

9. The method of any one of claims 1 to 8, wherein:

   - the selection of the power production technology comprises selecting one or more power production technologies among: wind turbines, PV panels, thermal solar panels, gas turbines, diesel engines, gas engines, steam turbines, combined cycle gas turbines (ccgt), biomass units, biogas units, boilers, fire heaters, heat pumps, electrolysers technologies, including PEM electrolysers, alkaline electrolysers and/or SOFC electrolysers, waste heat recovery units (WHRU), and/or heat recovery steam generators; and/or
   - the selection of the power storage technology comprises selecting one or more power storage technologies among: flywheels, BESS (battery energy storage systems), redox flow batteries, hydrogen storage units, power-to-X units, latent heat storage units, sensible heat storage units, CAES (compressed air energy storage) units and LAES (liquid air energy storage) units.

10. A computer-implemented method for upgrading a real-world hybrid power plant, the method comprising:

- performing the method of any one of claims 1 to 9, thereby determining an optimal hybrid sizing of the real-world hybrid power plant; and
- determining, based on the optimal hybrid sizing, one or more renewable power generating units to be integrated in the real-world hybrid power plant and/or an improvement of one or more existing renewable power generating units of the real-world hybrid power plant.

11. The method of claim 10, wherein the method further comprises, in the real-world hybrid power plant:

- integrating the determined renewable power generating units to the real-world hybrid power plant; and/or
- performing the improvement of the one or more existing renewable power generating units.

12. A computer-implemented method for designing a hybrid power plant comprising gas turbines and renewable power generating units, the method comprising:

- performing the method of any one of claims 1 to 9, thereby determining an optimal hybrid sizing of the real-world hybrid power plant; and
- determining, based on the optimal hybrid sizing, a size of the gas turbines and/or a size of the renewable power generating units.

13. A computer program comprising instructions for performing the method of any one of claims 1 to 9 and/or the method of any one of claims 10 to 11 and/or the method of claim 12.

14. A device comprising a computer-readable data storage medium having recorded thereon the computer program of claim 13.

15. The device of claim 14, wherein the device further comprises a processor coupled to the data storage medium.

FIG. 1

EP 4 181 338 A1

FIG. 2

FIG. 3

FIG. 4

FIG. 5

EP 4 181 338 A1

FIG. 6

FIG. 7

FIG. 8

**FIG. 9**

INPUTS

Location (GPS)
Area
Customer objective

Does the customer have local irradiance data?

YES → Retrieve field data from sensor → Retrieve field data from sensor → PVSyst

NO → Timestep choice
- Hourly → Retrieve Solargis data → PVSyst
- Minute → Retrieve subminute weather data → SolarOPS treatment

Is area constrained?*
*more or less acres than likely required MWp

YES → No tracking system

NO → Single axis tracking

Is shadowing a concern?

YES → Row layout: 1-up
Module orientation: landscape

NO → Row layout: 2-up
Module orientation: portrait

Selection of:
Inverter
Inverter load ratio

Phase 1 or 2?

YES → Physical layout study

NO → Output: hourly generation profile - phase 1

Redundancy of inverter/feeder

Selection of module string wiring

Outputs: PV farm siting for phase 2
Subminute generation profiles

| Type | Timescale | Advantage | Methods |
|------|-----------|-----------|---------|
| Long-term | Weeks, seasons, years | Estimate O&M planning of the hybrid power plant | Climatologic models, Numerical weather prediction (NWP) |
| Day-ahead | > 1 day | Schedule unit commitment | Corrected NWP |
| Intraday | > 1-6 hours | Adjust unit commitment | Blend of NWP and statistical models |
| Hour ahead | > 1 hour | Plan ramp-up/down of PGU Warm-up spare units / Shut down | Statistical, persistence |
| Intra-hour | 5-60 min | Assess renewable ramping (generation variation in MW/min) Assess reserve needs (BESS, PGU dynamical capabilities) | Statistical, persistence |

**Other forecasting:**
- Load forecasting
- Storage degradation forecasting (SOC, SOH models vs operation (high charging cycle/daily...) to assess repowering needs)
- Thermal PGU failure forecasting

Load forecast → EMS scheduling module (optimize cost, $CO_2$, AEP, degradation...)

PV, wind forecast → EMS scheduling module (optimize cost, $CO_2$, AEP, degradation...)

Component failure forecast → EMS scheduling module (optimize cost, $CO_2$, AEP, degradation...)

EMS Balancing module (give power profiles to BESS, PGU controllers)

PV, wind forecast → EMS Balancing module (give power profiles to BESS, PGU controllers)

Component failure forecast → EMS Balancing module (give power profiles to BESS, PGU controllers)

Benefits of forecasting for hybrid power systems:
- Decrease component O&M
- Decrease renewable curtailment
- Improve fuel consumption / reduce $CO_2$
- Decrease storage sizing
- Decrease redundancy of PGU
- Increase renewable penetration

**Forecasting influence on control strategy**

FIG. 10

FIG. 11

FIG. 12

SAVED CO2 emissions per year

| PV [MW] | 0 | | | | | | | | | | |
|---|---|---|---|---|---|---|---|---|---|---|---|
| 10 | 9 371 | 9 371 | 9 371 | 9 371 | 9 371 | 9 371 | 9 371 | 9 371 | 9 371 | 9 371 | 9 371 |
| 20 | 18 743 | 18 743 | 18 743 | 18 743 | 18 743 | 18 743 | 18 743 | 18 743 | 18 743 | 18 743 | 18 743 |
| 30 | 28 114 | 28 114 | 28 114 | 28 114 | 28 114 | 28 114 | 28 114 | 28 114 | 28 114 | 28 114 | 28 114 |
| 40 | 37 486 | 37 486 | 37 486 | 37 486 | 37 486 | 37 486 | 37 486 | 37 486 | 37 486 | 37 486 | 37 486 |
| 50 | 46 479 | 46 479 | 46 479 | 46 479 | 46 479 | 46 479 | 46 479 | 46 479 | 46 479 | 46 479 | 46 479 |
| 60 | 53 499 | 53 499 | 53 499 | 53 499 | 53 499 | 53 499 | 53 499 | 53 499 | 53 499 | 53 499 | 53 499 |
| 70 | 58 647 | 58 647 | 58 647 | 58 647 | 58 647 | 58 647 | 58 647 | 58 647 | 58 647 | 58 647 | 58 647 |
| 80 | 62 407 | 62 407 | 62 407 | 62 407 | 62 407 | 62 407 | 62 407 | 62 407 | 62 407 | 62 407 | 62 407 |
| 90 | 66 230 | 66 230 | 66 230 | 66 230 | 66 230 | 66 230 | 66 230 | 66 230 | 66 230 | 66 230 | 66 230 |
| 100 | 67 427 | 67 427 | 67 427 | 67 427 | 67 427 | 67 427 | 67 427 | 67 427 | 67 427 | 67 427 | 67 427 |
| | 0 | 6 | 12 | 18 | 24 | 30 | 36 | 42 | 48 | 54 | 60 |

Battery [MWh]

Cost of SAVED CO2 emissions

| PV [MW] | | | | | | | | | | | |
|---|---|---|---|---|---|---|---|---|---|---|---|
| 10 | $ 42,68 | $ 54,21 | $ 65,74 | $ 77,26 | $ 88,79 | $ 100,31 | $ 111,84 | $ 123,36 | $ 134,89 | $ 146,41 | $ 157,94 |
| 20 | $ 42,68 | $ 48,45 | $ 54,21 | $ 59,97 | $ 65,73 | $ 71,50 | $ 77,26 | $ 83,02 | $ 88,78 | $ 94,54 | $ 100,31 |
| 30 | $ 42,68 | $ 46,53 | $ 50,37 | $ 54,21 | $ 58,05 | $ 61,89 | $ 66,73 | $ 68,58 | $ 73,42 | $ 77,26 | $ 81,00 |
| 40 | $ 42,68 | $ 45,56 | $ 48,45 | $ 51,33 | $ 54,21 | $ 57,09 | $ 59,97 | $ 62,85 | $ 65,73 | $ 68,61 | $ 71,49 |
| 50 | $ 43,03 | $ 45,35 | $ 47,68 | $ 50,00 | $ 52,33 | $ 54,65 | $ 56,97 | $ 59,30 | $ 61,62 | $ 63,94 | $ 66,27 |
| 60 | $ 44,86 | $ 46,88 | $ 48,90 | $ 50,92 | $ 52,94 | $ 54,96 | $ 56,97 | $ 58,99 | $ 61,00 | $ 63,03 | $ 65,05 |
| 70 | $ 47,74 | $ 49,59 | $ 51,43 | $ 53,27 | $ 55,11 | $ 56,95 | $ 58,79 | $ 60,63 | $ 62,48 | $ 64,32 | $ 66,16 |
| 80 | $ 51,28 | $ 53,01 | $ 54,74 | $ 56,47 | $ 58,20 | $ 59,93 | $ 61,66 | $ 63,39 | $ 65,12 | $ 66,85 | $ 68,58 |
| 90 | $ 55,19 | $ 56,85 | $ 58,50 | $ 60,16 | $ 61,81 | $ 63,47 | $ 65,12 | $ 66,78 | $ 68,44 | $ 70,09 | $ 71,75 |
| 100 | $ 59,32 | $ 60,93 | $ 62,53 | $ 64,13 | $ 65,73 | $ 67,33 | $ 68,93 | $ 70,51 | $ 72,14 | $ 73,74 | $ 75,34 |
| | 0 | 6 | 12 | 18 | 24 | 30 | 36 | 42 | 48 | 54 | 60 |

Battery [MWh]

FIG. 13

FIG. 14

Europäisches
Patentamt

European
Patent Office

Office européen
des brevets

# EUROPEAN SEARCH REPORT

Application Number

EP 21 30 6586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/218505 A1 (KRUPADANAM ASHISH S [US] ET AL) 28 July 2016 (2016-07-28) * paragraphs [0004], [0014] – [0020], [0036] – [0062]; figures 1,3,6 * | 1–15 | INV. H02J3/00 |
| Y | WO 2019/002636 A2 (ACCIONA ENERGIA SA [ES]) 3 January 2019 (2019-01-03) * page 1, line 34 – page 4, line 3; figures 1–4 * | 1–7,9–15 | |
| Y | US 10 289 757 B2 (HST SOLAR FARMS INC [US]) 14 May 2019 (2019-05-14) * column 5, line 64 – column 6, line 17; figures 3,4 * | 1,8,10, 12–14 | |
| A | EP 3 301 623 A1 (BARTUCCI S P A [IT]) 4 April 2018 (2018-04-04) * paragraphs [0004], [0016] – [0030]; figures 4,5,6 * | 1–15 | |

TECHNICAL FIELDS
SEARCHED      (IPC)

H02J

The present search report has been drawn up for all claims

| Place of search | Date of completion of the search | Examiner |
|---|---|---|
| Munich | 8 April 2022 | Bergler, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 30 6586

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2022

| Patent document cited in search report | | Publication date | Patent family member(s) | | Publication date |
|---|---|---|---|---|---|
| US 2016218505 | A1 | 28-07-2016 | EP 3039771 | A1 | 06-07-2016 |
| | | | US 2016218505 | A1 | 28-07-2016 |
| | | | WO 2015031581 | A1 | 05-03-2015 |
| WO 2019002636 | A2 | 03-01-2019 | AR 112176 | A1 | 25-09-2019 |
| | | | AU 2017420806 | A1 | 20-02-2020 |
| | | | BR 112019027926 | A2 | 14-07-2020 |
| | | | CL 2019003852 | A1 | 31-07-2020 |
| | | | DO P2019000316 | A | 15-09-2020 |
| | | | EP 3648282 | A2 | 06-05-2020 |
| | | | PE 20200669 | A1 | 11-06-2020 |
| | | | SG 11201913484V | A | 30-01-2020 |
| | | | TN 2019000341 | A1 | 07-05-2021 |
| | | | TW 201905774 | A | 01-02-2019 |
| | | | US 2020227921 | A1 | 16-07-2020 |
| | | | WO 2019002636 | A2 | 03-01-2019 |
| US 10289757 | B2 | 14-05-2019 | EP 3167529 | A1 | 17-05-2017 |
| | | | US 2015331972 | A1 | 19-11-2015 |
| | | | WO 2015175923 | A1 | 19-11-2015 |
| EP 3301623 | A1 | 04-04-2018 | EP 3301620 | A1 | 04-04-2018 |
| | | | EP 3301623 | A1 | 04-04-2018 |

For more details about this annex : see Official Journal of the European Patent Office, No. 12/82